# FASCICULE DE BREVET EUROPEEN

(11) **EP 3 071 886 B1**
(45) Date de publication et mention de la délivrance du brevet: **05.09.2018**
(21) Numéro de dépôt: 14821722.7
(22) Date de dépôt: 20.11.2014
(51) Int. Cl.: F23R 3/34, F23D 11/00, F23K 5/06, F02C 9/34, F02C 7/228, F02C 7/232, F02M 41/04

(54) **DISPOSITIF D'INJECTION MULTIPOINT ET PROCÉDÉ D'INJECTION POUR MOTEUR D'AÉRONEF**
MEHRSTELLIGE EINSPRITZVORRICHTUNG UND EINSPRITZVERFAHREN FÜR EIN FLUGZEUGTRIEBWERK
MULTI-POINT INJECTION DEVICE AND INJECTION METHOD FOR AN AIRCRAFT ENGINE

(30) Priorité: 20.11.2013 FR 1361428
(43) Date de publication de la demande: 28.09.2016
(73) Titulaire: Safran Aircraft Engines, 75015 Paris (FR)
(72) Inventeur: CHALAUD, Sébastien, F-77550 Moissy-Cramayel Cedex (FR)
(74) Mandataire: Regimbeau
(86) Numéro de dépôt international: PCT/FR2014/052980
(87) Numéro de publication internationale: WO 2015/075389

(56) Documents cités:
- US-A1- 2010 199 681
- US-A1- 2012 159 953
- US-A1- 2013 042 920

## Description

### DOMAINE GENERAL

L'invention se rapporte au domaine des injecteurs de carburants, et plus particulièrement au domaine des injecteurs de carburants multipoints pour moteur d'aéronef.

### ETAT DE L'ART

Depuis plusieurs années, les directives Européennes imposent au secteur aérien une réduction du taux d'oxydes d'azote (NOx) émis par les aéronefs.

Pour réduire l'émission de NOx dans des aéronefs, il est connu d'utiliser un dispositif d'injection de carburant multipoint, c'est-à-dire un dispositif d'injection délivrant du carburant sur deux voies d'injection menant au moteur. Un tel dispositif d'injection comprend typiquement un organe distributeur de carburant permettant de répartir un débit de carburant entrant sur l'une et/ou l'autre des voies d'injection, afin d'avoir une meilleure homogénéité du mélange air/fuel dans le moteur et donc une meilleure combustion, ce qui permet de réduire les polluants.

La répartition de débit de carburant entre les deux voies d'injection est ajustée au moyen d'un élément mobile, généralement contrôlé par un premier actionneur et un premier capteur. La répartition effectuée dépend de différents paramètres de vol, et dans un certain nombre de situations, comme lors du démarrage ou du ralenti sol ou vol par exemple, seule une première voie d'injection déterminée (généralement appelée voie « pilote ») doit être débitante, et la deuxième voie d'injection doit être non-débitante.

Par ailleurs, suivant les choix architecturaux et suivant le moteur, il peut être décidé que lorsque la deuxième voie n'est pas débitante, de vider cette deuxième voie d'injection du carburant stagnant qu'elle contient, afin d'éviter une cokéfaction du carburant stagnant dans cette deuxième voie d'injection.

Aussi, certains dispositifs d'injections comprennent, en sus de l'organe distributeur, un organe de purge supplémentaire adapté pour enclencher le vidage de la deuxième voie d'injection.

Or, l'organe de purge et l'organe distributeur doivent être pilotés de façon parfaitement synchronisée. En effet, l'organe de purge ne doit enclencher une purge de la deuxième voie d'injection que lorsque cette deuxième voie ne reçoit pas de carburant de l'organe distributeur, sous peine de perturber l'injection de carburant en vol.

Par ailleurs, l'ajout de cet organe supplémentaire de purge dans un dispositif d'injection augmente les dimensions de ce dispositif.

Le dispositif d'injection décrit dans le document US 2012/0159953 s'efforce de pallier ces inconvénients au moyen d'un élément mobile entre des positions permettant de mettre en oeuvre une purge et/ou une injection de carburant.

Toutefois, l'élément mobile d'un tel dispositif d'injection peut être sujet à des défaillances et ainsi se retrouver bloqué dans une position préjudiciable pour le fonctionnement du moteur.

Une première conséquence d'une telle défaillance peut être un risque de combustion du carburant collecté au cours de purges passées.

Une deuxième conséquence est une injection de carburant insuffisante en termes de débit dans le moteur, ne permettant pas au moteur de maintenir l'aéronef en vol.

Le document US 2012/0159953 décrit un dispositif selon le préambule de la revendication 1 et un procédé selon le préambule de la revendication 14.

### PRESENTATION DE L'INVENTION

Un but de l'invention est de diminuer les risques provoqués par une mise en oeuvre désynchronisée de la fonction d'injection multipoint et la fonction de purge.

Un autre but de l'invention est de réduire les dimensions d'un dispositif d'injection qui assure les fonctions d'injection multipoint et de purge.

Encore un autre but est d'éviter, en cas de défaillance d'un tel dispositif d'injection, des risques de combustion de carburant collecté au cours de purges passées et une poussée insuffisante du moteur destinataire du carburant.

Il est donc proposé un dispositif d'injection de carburant multipoint pour moteur d'aéronef, comprenant une voie d'entrée, au moins deux voies d'injection, et une voie de purge, un organe distributeur de carburant connecté à chaque voie et comprenant un élément mobile qui comporte un passage d'injection et un passage de purge, et qui est configuré pour adopter :
- une première plage de positions dans lesquelles le passage d'injection interconnecte la voie d'entrée et les voies d'injection, et
- une deuxième plage de positions dans lesquelles le passage d'injection interconnecte la voie d'entrée et au moins une première voie d'injection tandis que le passage de purge interconnecte la voie de purge et au moins une deuxième voie d'injection,
le dispositif comprenant en outre un actionneur adapté pour déplacer l'élément mobile dans une position de sécurité lors de la détection d'une défaillance de l'organe de distribution, le passage d'injection interconnectant, dans cette position de sécurité de l'élément mobile, la voie d'entrée au moins une des voies d'injection tandis que le passage de purge n'interconnecte la voie de purge à aucune des voies d'injection.

Lorsque l'élément mobile du dispositif ainsi proposé occupe une position contenue dans la première plage, l'organe distributeur met en oeuvre une injection multipoint répartie entre les différentes voies d'injection lorsque du carburant est reçu depuis la voie d'entrée.

Et lorsque l'élément mobile occupe une position contenue dans la deuxième plage, l'organe distributeur met simultanément en oeuvre une injection vers au moins une voie d'injection et autorise une purge de la deuxième voie. La présence des deux passages dans l'élément mobile permet alors de garantir que la voie d'entrée ne peut fournir pas de carburant à la deuxième voie d'injection alors que son contenu est évacué sur la voie de purge.

Les fonctions d'injection multipoint et de purge sont ainsi réunies avantageusement dans un unique organe distributeur, et sélectivement activées par simple déplacement de l'élément mobile entre les première et deuxième plages de position, prévenant ainsi les risques de désynchronisation précédemment cités.

Par ailleurs, dans la position de sécurité, la voie de purge ne peut pas recevoir du carburant d'une quelconque voie d'injection ; le carburant déjà collecté ne peut donc pas prendre feu.

En outre, dans la position de sécurité, au moins une des voies d'injection reçoit du carburant de la voie d'entrée, via le passage d'injection. Il est ainsi garanti la fourniture de carburant de façon à éviter une perte de poussée du moteur destinataire du carburant.

Le dispositif d'injection selon l'invention est par ailleurs simple de mise en oeuvre, et occupe moins de place que les dispositifs d'injection selon l'art antérieur.

Le dispositif d'injection peut comprendre un unique capteur adapté pour mesurer la position de l'élément mobile, et un unique actionneur pour déplacer l'élément mobile, le capteur et l'actionneur étant reliés à une unité de commande comprise dans le moteur, ou bien plus généralement dans l'aéronef. Les dispositifs d'injection de l'art antérieur comprenant un organe de purge et un organe de distribution distincts ne peuvent être pilotés par une telle unité de commande que par deux actionneurs et deux capteurs de position au minimum. Or, une telle unité de commande ne dispose généralement que d'un nombre limité de ports de connexions avec des équipements à commander. Le dispositif d'injection selon l'invention sollicite donc par rapport aux dispositifs d'injection de l'art antérieur moins de ports de connexion d'une telle unité de commande, et permet de libérer un plus grand nombre de tels ports pour la commande d'autres équipements par une telle unité de commande.

Le dispositif d'injection proposé est par ailleurs simple à réaliser et consomme peu de place dans le moteur par rapport à un dispositif comprenant un organe distributeur et un organe de purge distincts.

Le passage d'injection peut être adapté pour interconnecter la voie d'entrée et uniquement la première voie d'injection lorsque l'élément mobile adopte la position de sécurité.

L'utilisation d'une seule des deux voies d'injection est requise lors du démarrage ou du ralenti sol ou vol d'un aéronef. En conséquence, la position de sécurité ainsi configurée permet de surmonter une défaillance du dispositif d'injection dans ces phases de vol particulières.

La voie d'entrée peut être terminée par un orifice d'entrée débouchant entièrement dans le passage d'injection lorsque l'élément mobile adopte la position de sécurité. La première voie d'injection peut en outre être terminée par un orifice d'injection débouchant entièrement dans le passage d'injection lorsque l'élément mobile adopte la position de sécurité.

Ces caractéristiques ont pour effet d'augmenter le débit de carburant communiqué au moteur dans la position de sécurité, et ainsi encore diminuer les risques de perte de poussée du moteur en cas de défaillance du dispositif d'injection.

L'élément mobile peut être configuré pour adopter une troisième plage de positions dans laquelle le passage d'injection interconnecte la voie d'entrée avec seulement la première voie d'injection, et dans laquelle le passage de purge n'interconnecte la voie de purge avec aucune des voies d'injection.

L'élément mobile peut être un tiroir coulissant dans un fourreau selon un axe longitudinal et, dans la position de sécurité, le tiroir venir en butée contre un fond du fourreau.

Les voies d'injection peuvent être au nombre de deux et être terminées chacune par un orifice d'injection débouchant dans le fourreau, le passage d'injection s'étendre transversalement à l'axe longitudinal et comporter une largeur suivant ledit axe qui est égale à la somme de la longueur suivant ledit axe séparant les bords les plus proches des deux orifices d'injection et du diamètre des deux orifices d'injection suivant ledit axe, les deux orifices étant de même diamètre.

Par ailleurs, la voie d'entrée peut être terminée par un orifice d'entrée débouchant dans le fourreau à une position longitudinale qui est comprise entre les positions longitudinales respectives des orifices d'injection, le diamètre du passage d'injection suivant l'axe longitudinal étant supérieur au diamètre de l'orifice d'entrée suivant ledit axe.

La voie de purge peut en outre être terminée par un orifice de purge débouchant dans le fourreau, les bords les plus proches des orifices d'entrée et de purge étant séparés par une distance suivant l'axe longitudinal qui est supérieure à au diamètre du passage d'injection suivant ledit axe.

Le tiroir peut comporter une portion médiane séparant les passages d'injection et de purge, la longueur de la portion médiane suivant l'axe longitudinal étant supérieure au diamètre de chaque orifice d'injection suivant ledit axe et inférieure à la distance séparant les bords les plus proches des deux orifices d'injection suivant ledit axe.

La longueur de la portion médiane suivant l'axe longitudinal peut en outre être inférieure à la distance suivant ledit axe séparant l'orifice d'entrée et l'orifice d'injection qui termine la deuxième voie d'injection.

Il est également proposé dans le cadre de l'invention un moteur d'aéronef comprenant au moins un dispositif d'injection tel que décrit précédemment.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente de façon schématique un circuit de carburant d'un moteur d'aéronef comprenant un dispositif d'injection de carburant selon un mode de réalisation de l'invention.
- Les figures 2A et 2B sont des vues en coupe partielle de deux éléments respectifs d'un organe de distribution selon un mode de réalisation et compris dans le dispositif d'injection de la figure 1.
- La figure 3 est une vue en coupe d'un organe de distribution comprenant les éléments illustrés sur les figures 2A et 2B et configuré dans une première configuration.
- La figure 4 est une vue en coupe de l'organe de distribution de la figure 3, configuré dans une deuxième configuration.
- La figure 5 est une vue en coupe de l'organe de distribution de la figure 3, configuré dans une troisième configuration.
- La figure 6 est une vue en coupe de l'organe de distribution de la figure 3, configuré dans une quatrième configuration.
- La figure 7 est une vue en coupe de l'organe de distribution de la figure 3, configuré dans une cinquième configuration.
Sur l'ensemble des figures, les éléments similaires portent des références identiques.

### DESCRIPTION DETAILLEE DE L'INVENTION

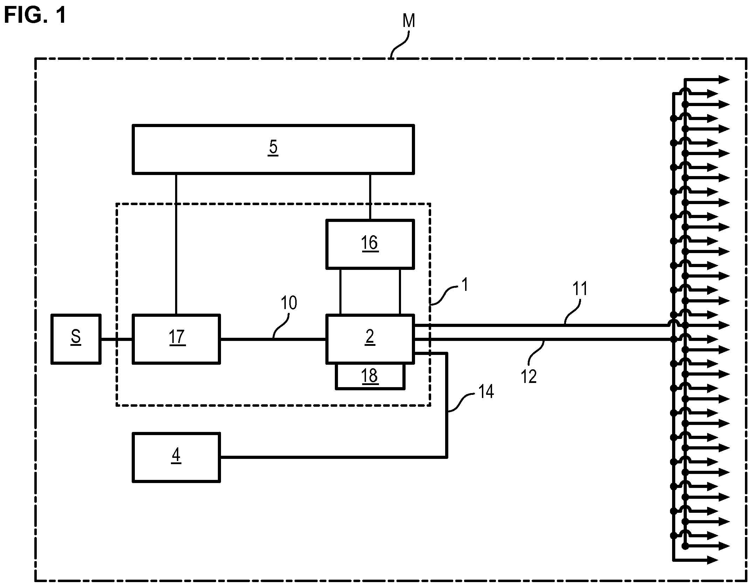

En référence à la figure 1, un moteur M d'aéronef comprend un dispositif d'injection 1 de carburant multipoint.

Le dispositif d'injection 1 comprend un organe distributeur 2 relié à une voie d'entrée 10, à deux voies d'injection 11, 12, et à une voie de purge 14.

Chaque voie 10, 11, 12, 14 est une canalisation adaptée pour transporter du carburant.

La voie d'entrée 10 comporte une extrémité amont destinée à être connectée à une source de carburant S et une extrémité aval connectée à un premier orifice de l'organe distributeur 2.

Chaque voie d'injection comporte une extrémité amont connectée à un orifice respectif d'injection de l'organe distributeur 2. Chaque voie d'injection 11, 12 peut également comprendre une pluralité d'extrémités aval terminées chacune par une buse.

La première voie d'injection 11 dite voie d'injection « pilote », est prévue pour délivrer un débit de carburant permanent optimisé pour les bas régimes.

La deuxième voie d'injection 12, dite voie d'injection « principale », délivre un débit de carburant intermittent optimisé pour les hauts régimes. Ces deux voies 11, 12 ont été développées pour permettre une meilleure adaptation de l'injection d'air et de carburant aux différents régimes de fonctionnement des chambres de combustion, afin de réduire leur émission de polluants tels que les oxydes d'azote et les fumées.

La voie de purge 14 comporte une extrémité amont connectée à un orifice de purge 204 de l'organe distributeur 2, et une extrémité aval destinée à être connectée à un dispositif collecteur de purge.

L'organe distributeur 2 comporte un élément mobile entre plusieurs configurations, qui sera décrit plus loin.

Le dispositif d'injection comporte également un actionneur 16 adapté pour déplacer l'élément mobile, par exemple de type hydraulique, et un capteur 18 de position de cet élément mobile, par exemple un capteur 18 de type LVDT (« Linear Variable Differential Transformer » en anglais). L'actionneur 16 et le capteur de position 18 peuvent être intégrés à l'organe distributeur 2 ou non.

Le capteur 18 de position sont reliés à un port respectif d'une l'unité de commande 5 et est adaptée pour lui communiquer la position courante de l'élément mobile dans l'organe distributeur 2.

L'actionneur 16 est relié à un autre port de l'unité de commande 5.

L'unité de commande 5 est adaptée pour piloter le déplacement de l'élément mobile en fonction d'une consigne de distribution et une consigne de purge.

L'unité de commande 5 peut être intégré au dispositif d'injection 1, ou bien être externe à celui-ci (l'unité peut par exemple être un calculateur intégré au moteur M, comme représenté sur la figure 1, ou bien être un calculateur d'un aéronef non seulement relié au dispositif d'injection 1 mais également à d'autres équipements de cet aéronef).

Le dispositif d'injection 1 peut également comporter sur la voie d'entrée 10, un doseur 17 de débit agencé en amont de l'organe distributeur 2. Le doseur 17 est adapté pour fournir à l'organe distributeur 2 un flux de carburant dont le débit est contrôlé. Ce débit peut par exemple être déterminé par l'unité de commande 5.

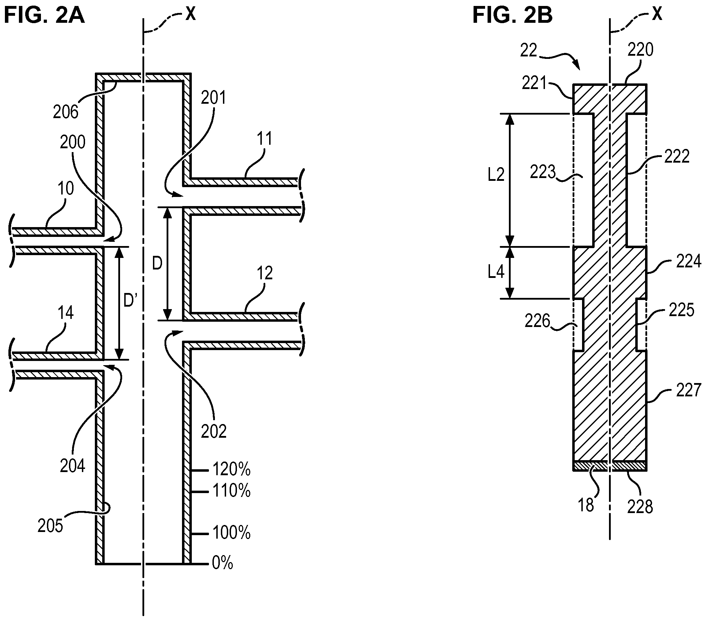

En référence aux **figures 2A et 2B****,** l'organe distributeur 2 comporte un fourreau 20, et l'élément mobile est un tiroir 22 mobile en translation dans le fourreau 20 selon un axe longitudinal X.

Le fourreau 20 comprend une paroi interne 205 définissant une cavité cylindrique dont les génératrices sont parallèles à l'axe longitudinal X, et un fond 206. Sont formés dans la paroi interne 205 les orifices d'entrée 200, d'injection 201, 202, et de purge 204.

Par convention, toutes les longueurs et diamètres mentionnés dans la suite sont implicitement mesurées parallèlement à l'axe longitudinal X, sauf mention contraire.

Par ailleurs, on appellera premier orifice d'injection 201 l'orifice d'injection le plus proche du fond 206 du fourreau 20, et deuxième orifice d'injection 202 celui le plus éloigné du fond 206 du fourreau 20.

Les deux orifices d'injection 201, 202 sont centrés sur une première génératrice de la paroi, et les orifices d'entrée 200 et de purge 204 sont centrés sur une deuxième génératrice de la paroi opposée à la première génératrice par rapport à l'axe longitudinal X, l'orifice de purge 204 étant plus éloigné du fond 206 que l'orifice d'entrée 200.

Le tiroir 22 comporte une première extrémité 220 en regard du fond 206 du fourreau 20, et une deuxième extrémité 228 opposée à la première extrémité 220.

Le capteur 18 de position du dispositif d'injection 1 (illustré sur la figure 1) est logé dans le tiroir 22 au niveau de la deuxième extrémité 228. L'actionneur 16 du dispositif d'injection 1 (également illustré sur la figure 1) peut également être fixé à la deuxième extrémité 228.

Le tiroir 22 comporte deux passages distincts adaptés pour transporter du carburant selon une direction transversale au tiroir 22 perpendiculaire à l'axe longitudinal X : un passage d'injection 223, et un passage de purge 226.

Le tiroir 22 comporte les cinq portions successives suivantes le long de l'axe longitudinal X :
- une première portion terminale 221 se terminant par la première extrémité 220 du tiroir 22 en regard du fond 206,
- une première portion intermédiaire 222 prolongeant la première portion terminale 221 et définissant le passage d'injection 223,
- une portion médiane 224 prolongeant la première portion intermédiaire 222,
- une deuxième portion intermédiaire 225 prolongeant la portion médiane 224 et définissant le passage de purge 226, et
- une deuxième portion terminale 227 prolongeant la deuxième portion intermédiaire 225 et se terminant par la deuxième extrémité 228 du tiroir 22.
Les portions terminales 221, 227 et la portion médiane 224 présentent une section dite « externe » qui est sensiblement complémentaire de la section de la cavité du fourreau 20. L'homme du métier comprendra par « section sensiblement complémentaire » une section adaptée pour prévenir des fuites de carburant entre l'enveloppe du tiroir 22 et la cavité du fourreau 20, au niveau des portions 221, 224, et 227.

La première portion intermédiaire 222 du tiroir 22 présente une section plus petite que la section externe, par exemple centrée sur l'axe X. Le vide annulaire laissé entre la première portion intermédiaire 222 et la paroi du fourreau 20 définit alors le passage d'injection 223.

La première portion intermédiaire 222 s'étend sur une longueur qui est supérieure:
- au diamètre D1 du premier orifice d'injection 201,
- au diamètre D2 du deuxième orifice d'injection 201,
- au diamètre de l'orifice d'entrée 200 ; et
- à la distance entre les bords les plus proches des deux orifices d'injection 201, 202.

La deuxième portion intermédiaire 225 du tiroir 22 présente une section également plus petite que la section externe du tiroir 22, par exemple centrée sur l'axe X. Le vide annulaire laissé entre la deuxième portion intermédiaire 225 et la paroi du fourreau 20 définit alors le passage de purge 226.

La portion médiane 224 du tiroir 22 isole les deux passages l'un de l'autre.

La portion médiane 224 présente une longueur L4 suivant l'axe longitudinal X supérieure au diamètre D2 du deuxième orifice d'injection 202.

La portion médiane 224 présente par ailleurs une longueur L4 suivant l'axe longitudinal X inférieure à la distance suivant l'axe longitudinal X entre les bords les plus proches de l'orifice d'entrée 200 et du deuxième orifice d'injection 202.

La distance longitudinale D' entre les bords les plus proches de l'orifice d'entrée 200 et de l'orifice de purge 204 est supérieure à la longueur L2 de la première portion intermédiaire 222.

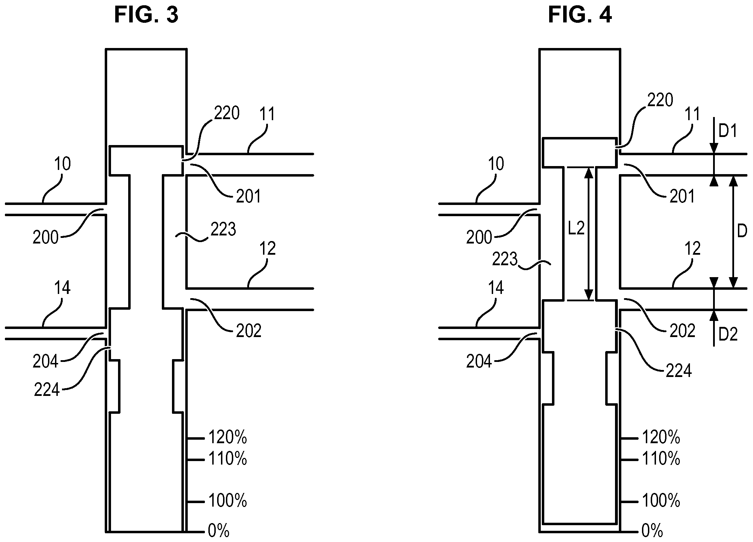

L'organe distributeur 2 du dispositif d'injection 1 peut être configuré dans plusieurs configurations par coulissement du tiroir 22 dans le fourreau 20 selon l'axe X, chaque configuration correspondant à une plage de positions spécifiques du tiroir 22 dans le fourreau 20. Ces configurations vont maintenant être détaillées en regard des **figures 3 à 7****.**

Par convention, la position du tiroir 22 est implicitement la position mesurée par le capteur 18 de position.

Par ailleurs, les termes de « connexion » ou « d'interconnexion » utilisés dans la suite pour des passages et des voies du dispositif d'injection 1 désignent implicitement un raccordement de canalisations autorisant le passage de carburant.

### Configuration d'injection multipoint

Dans une plage de positions du tiroir 22 dite d'injection multipoint, le passage d'injection 223 interconnecte l'orifice d'entrée 200 avec les voies d'injection 11, 12, comme illustré sur les **figures 3 et 4****.**

Plus précisément, dans chaque position de cette plage d'injection multipoint, l'entièreté de l'orifice d'entrée 200 débouche dans le passage d'injection 223, et au moins une portion d'au moins un des orifices d'injection 201, 202 débouche également dans le passage d'injection 223.

La plage d'injection multipoint est bornée par deux positions du tiroir 22 référencées respectivement 0% et 100%.

La **figure 3** montre la position 0% du tiroir 22, et **la** **figure 4** montre une position du tiroir 22 comprise entre 0 et 100%.

La longueur L2 de la première portion intermédiaire 222 (correspondant au diamètre du passage d'injection 223) et le diamètre des deux orifices d'injection 201, 202 sont adaptées pour que, dans toute position x de la plage d'injection multipoint, x% d'un débit total de carburant débouchant dans le passage d'injection 223 par l'orifice d'entrée 200 soit délivré sur la première voie d'injection 11 tandis que (100-x)% de ce débit total soit délivré dans la deuxième voie d'injection 12. La longueur L2 peut être égale à la somme de la longueur D séparant les bords les plus proches des deux orifices d'injection et du diamètre d'un des deux orifices d'injection.

Comme la portion médiane 224 du tiroir 22 est de longueur supérieure au diamètre du deuxième orifice d'injection 202, ce deuxième orifice d'injection 202 ne peut déboucher sur le passage de purge 226. En conséquence, dans chaque position de la plage d'injection multipoint, le passage de purge 226 n'est connecté à aucune des voies d'injection 11, 12.

Par ailleurs, l'orifice de purge 204 ne débouche pas dans le passage d'injection 223, ce qui interdit une redirection d'un flux de carburant entrant dans le passage d'injection 223 par l'orifice d'entrée 200 vers l'orifice de purge 204.

### Configuration d'injection simple

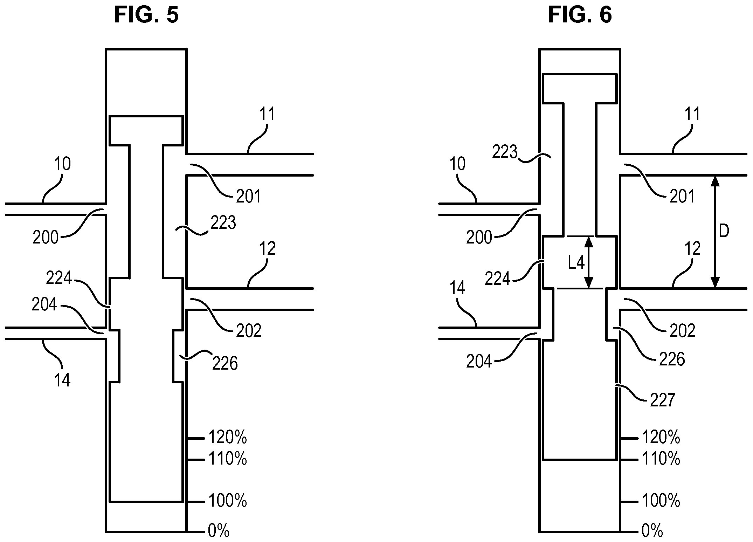

Dans une plage de positions du tiroir 22 dite d'injection simple, le passage d'injection 223 interconnecte l'orifice d'entrée 200 avec une seule des voies d'injection 11, 12, comme illustré sur la figure 5.

La **figure 5** montre la position du tiroir 22 référencée 100% comprise dans la plage d'injection simple.

Cette plage d'injection simple est connexe à la plage d'injection double ; le tiroir 22 passe donc de la plage d'injection double à la plage d'injection simple en rapprochant le tiroir 22 du fond 206 du fourreau 20, dès que l'entièreté du deuxième orifice d'injection 202 est obstruée par la portion médiane 224 du tiroir 22.

Cette plage d'injection simple n'est pas réduite à une seule position du fait que la longueur L4 de la portion médiane 224 est supérieure au diamètre de l'orifice d'injection 202.

Dans chaque position de cette plage d'injection simple, l'entièreté de l'orifice d'entrée 200 et l'entièreté du premier orifice d'injection 201 débouchent dans le passage d'injection 223.

Ainsi, un flux de carburant en provenance de la voie d'entrée 10 peut pénétrer dans le passage d'injection 223 par l'orifice d'entrée 200 et en ressortir par le premier orifice d'injection 201 sans réduction de débit.

Le tiroir 22 du dispositif d'injection 1 peut être avantageusement configuré dans la plage d'injection simple dans certaines phases de vol de l'aéronef dans lequel il est utilisé, comme le démarrage de l'aéronef ou une phase de ralenti au sol.

### Configuration de purge

Dans une plage de positions du tiroir 22 dite de purge, le passage d'injection 223 interconnecte l'orifice d'entrée 200 avec le premier orifice d'injection 201, et le passage de purge 226 interconnecte le deuxième orifice d'injection 202 et l'orifice de purge 204.

La **figure 6** montre une position du tiroir 22 référencée 110% comprise dans la plage d'injection simple.

Cette plage de purge est connexe à la plage d'injection simple ; le tiroir 22 passe de la plage d'injection simple à la plage de purge en rapprochant encore le tiroir 22 du fond 206 du fourreau 20, dès qu'au moins une portion du deuxième orifice d'injection 202 débouche dans le passage de purge 226 et qu'au moins une portion de l'orifice de purge 204 débouche également dans le passage de purge 226.

Comme la portion médiane 224 présente une longueur suivant l'axe inférieure à la distance longitudinale entre les bords les plus proches de l'orifice d'entrée 200 et du deuxième orifice d'injection 202, il existe au moins une position du tiroir 22 incluse dans la plage de purge dans laquelle l'entièreté de l'orifice d'entrée 200 débouche dans le passage d'injection 223, et dans laquelle l'entièreté du deuxième orifice d'injection 202 débouche dans le passage de purge 226 : 100% d'un flux en provenance de la voie d'entrée 10 peut alors être convoyé vers la première voie d'injection 11 sans que le tiroir 22 ne provoque une réduction du débit de ce flux.

Par ailleurs, du carburant stagnant dans la deuxième voie d'injection 12 peut être évacuée sur la voie de purge 14 après avoir traversé le passage de purge 226.

Le carburant stagnant peut être automatiquement évacué sur la voie de purge 14 grâce à un différentiel de pression entre la voie de purge 14 et la deuxième voie d'injection 12 et/ou par simple gravité.

### Configuration de sécurité

Dans une plage de positions du tiroir 22 dite de sécurité, le passage d'injection 223 interconnecte l'orifice d'entrée 200 avec le premier orifice de sortie, et le passage de purge 226 n'interconnecte pas le deuxième orifice d'injection 202 et l'orifice de sortie.

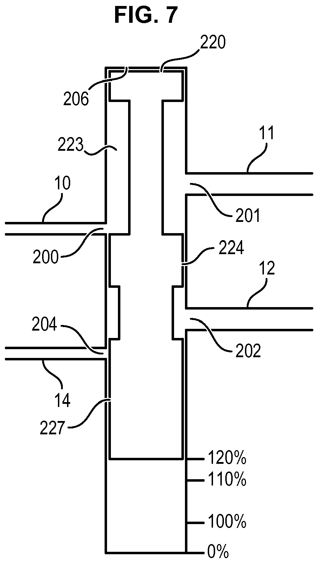

La **figure 7** montre une position du tiroir 22 référencée 120% comprise dans la plage de sécurité.

Cette plage de sécurité est connexe à la plage de purge ; le tiroir 22 passe de la plage de purge à la plage de sécurité en rapprochant encore le tiroir 22 du fond 206 du fourreau 20, dès que l'orifice de purge 204 ou le deuxième orifice d'injection 202 ne débouche plus dans le passage de purge 226 mais est obstrué par la deuxième portion terminale 227 (dans le mode de réalisation illustré, c'est l'orifice de purge 204 qui est obstrué par la portion terminale 227).

Cette plage de sécurité comprend notamment une position extrémale du tiroir 22 dans le fourreau 20 (il s'agit de la position illustrée en figure 7) : cette position extrémale du tiroir 22 est atteinte quand la première extrémité 220 du tiroir 22 vient en butée contre le fond 206 du fourreau 20.

Tout comme la plage d'injection simple, la plage de sécurité permet de rediriger un flux de carburant en provenance de la voie d'entrée 10 sur la première voie de sortie et de ne mettre en oeuvre aucune purge de la deuxième voie d'injection 12.

Cette plage de sécurité est avantageuse lorsque survient une perte du contrôle du déplacement du tiroir 22 dans le fourreau 20 (provoquée par exemple par une défaillance du capteur 18 de position).

Lorsqu'une telle perte de contrôle est détectée, le tiroir 22 va naturellement (par l'équilibre des forces mises en oeuvre) jusqu'à sa position extrémale, de sorte de garantir une injection simple via la première voie d'injection 11 dans le moteur tout en interdisant une purge de la deuxième voie d'injection 12. Cet équilibre des forces poussées peut par exemple être mis en oeuvre par un ressort compris dans l'actionneur 16.

Un des objectifs de la plage de positions de sécurité est de minimiser les détériorations du moteur provoquées par une défaillance du dispositif d'injection.

Premièrement une seule de deux voies d'injection est sollicitée (la première, ou voie « pilote ») dans la position de sécurité. L'utilisation d'une seule des deux voies d'injection est requise lors du démarrage ou du ralenti sol ou vol d'un aéronef. En conséquence, la position de sécurité ainsi configurée permet de surmonter une défaillance du dispositif d'injection dans ces phases de vol particulières.

Deuxièmement, on interdit toute purge dans la position de sécurité car on viendrait alors amener de l'air très chaud de la chambre de combustion vers l'organe de purge relié au circuit carburant. Il pourrait y avoir un risque de feu, risque largement plus préjudiciable qu'une éventuelle cokéfaction dans les voies d'injection dans un contexte de défaillance du dispositif d'injection.

Troisièmement, il convient, dans la position de sécurité, d'éviter que le moteur ne s'éteigne malgré le fait qu'une seule des deux voies d'injection soit sollicitée (en l'occurrence la voie « pilote »). C'est la raison pour laquelle, dans chaque position de cette plage de sécurité, l'entièreté de l'orifice d'entrée 200 et l'entièreté du premier orifice d'injection 201 débouchent dans le passage d'injection 223. Ceci permet en effet au passage d'injection de transmettre un débit maximal en provenance de la voie d'entrée à la première voie d'injection (voie « pilote »).

L'unité de commande 5 peut déterminer une commande de pilotage de l'actionneur 16 de façon à déplacer le tiroir 22 dans le fourreau 20 vers l'une ou l'autre des plages présentées précédemment.

Cette commande peut être élaborée à partir de deux consignes : une consigne de répartition, et une consigne de purge.

La consigne de répartition peut par exemple un ratio de débit total (entre 0% et 100%) à fournir à l'une des voies d'injection 11, 12, par exemple la première voie d'injection.

La consigne de purge peut être un booléen indiquant si une purge de la deuxième voie d'injection 12 doit être enclenchée ou non.

### Variantes de réalisation

Le dispositif d'injection multipoint selon l'invention n'est pas limité au mode de réalisation décrit précédemment en regard des figures annexées.

Les passages d'injection et de purge peuvent être réalisés autrement que par des portions de section étrécie ; par exemple, par des fentes s'étendant longitudinalement, et autorisant le passage de carburant selon une direction sensiblement transversale.

Les passages d'injection et de purge peuvent être droits ou bien présenter des profils plus complexes, comprenant des coudes ou des courbures.

Le capteur 18 de position du dispositif peut être logé à d'autres emplacements du tiroir 22.

Les orifices d'entrée, de purge, et d'injection peuvent être de dimensions identiques ou différentes.

Les orifices d'entrée, de purge, et d'injection peuvent également être de section circulaire ou non (le terme de diamètre utilisé dans la description qui précède est dans ce cas à prendre dans un sens d'un diamètre moyen).

L'élément mobile 22 du dispositif d'injection 1 ne se limite pas à un tiroir 22 coulissant dans un fourreau 20. Dans une variante non illustrée, l'élément mobile 22 peut être mobile en rotation par rapport à un élément de support de l'organe distributeur 2, les orifices étant agencés les uns par rapport aux autres dans l'élément de support à des angles adaptés pour assurer les interconnexions (et les absences d'interconnexions) décrites précédemment. Le dispositif d'injection 1 peut alors passer d'une configuration à l'autre par rotation de cet élément mobile 22 par rapport à l'élément de support.

Le dispositif d'injection 1 peut en outre comprendre plus de deux voies d'injection 11, 12, dont au moins une peut être purgée par interconnexion avec une voie de purge.

## Revendications

1. Dispositif d'injection (1) de carburant multipoint pour moteur (M) d'aéronef, comprenant :
- une voie d'entrée (10), au moins deux voies d'injection (11, 12), et une voie de purge (14),
- un organe distributeur (2) de carburant connecté à chaque voie et comprenant un élément mobile (22) qui comporte un passage d'injection (223),
dans lequel l'élément mobile (22) comporte en outre un passage de purge (226), et est configuré pour adopter :
- une première plage de positions dans lesquelles le passage d'injection (223) interconnecte la voie d'entrée (10) et les voies d'injection (11, 12), et
- une deuxième plage de positions dans lesquelles le passage d'injection (223) interconnecte la voie d'entrée (10) et au moins une première voie d'injection (11) tandis que le passage de purge (226) interconnecte la voie de purge (14) et au moins une deuxième voie d'injection (12),
le dispositif étant **caractérisé en ce qu'**il comprend en outre
- un actionneur (16) adapté pour déplacer l'élément mobile (22),
- un capteur (18) de position configuré pour mesurer une position de l'élément mobile,
- une unité de commande (5) adaptée pour recevoir la position mesurée par le capteur (18), pour piloter le déplacement de l'élément mobile (22) par l'actionneur en fonction d'une consigne de distribution et une consigne de purge de sorte à déplacer l'élément mobile dans une position de sécurité lors de la détection d'une défaillance de l'organe de distribution, le passage d'injection (223) interconnectant, dans cette position de sécurité de l'élément mobile (22), la voie d'entrée (10) et au moins une (11) des voies d'injection tandis que le passage de purge (226) n'interconnecte la voie de purge (14) à aucune des voies d'injection (12).

2. Dispositif d'injection (1) de carburant selon la revendication 1, dans lequel le passage d'injection (223) interconnecte la voie d'entrée (10) et uniquement la première voie d'injection (11) lorsque l'élément mobile (22) adopte la position de sécurité.

3. Dispositif d'injection (1) de carburant selon l'une des revendications 1 et 2, dans lequel la voie d'entrée est terminée par un orifice d'entrée (200) débouchant entièrement dans le passage d'injection (223) lorsque l'élément mobile (22) adopte la position de sécurité.

4. Dispositif d'injection (1) de carburant selon l'une des revendications 1 à 3, dans lequel, la première voie d'injection (11) est terminée par un orifice d'injection (201) débouchant entièrement dans le passage d'injection (223) lorsque l'élément mobile (22) adopte la position de sécurité.

5. Dispositif d'injection (1) de carburant selon l'une des revendications 1 à 4, dans lequel l'élément mobile (22) est configuré pour adopter une troisième plage de positions dans laquelle le passage d'injection (223) interconnecte la voie d'entrée (10) avec seulement la première voie d'injection (11), et dans laquelle le passage de purge (226) n'interconnecte la voie de purge (14) avec aucune des voies d'injection (12).

6. Dispositif d'injection (1) de carburant selon l'une des revendications 1 à 5, dans lequel l'élément mobile (22) est un tiroir coulissant dans un fourreau (20) selon un axe longitudinal (X) et en ce que, dans la position de sécurité, le tiroir (22) vient en butée contre un fond (206) du fourreau (20).

7. Dispositif d'injection (1) de carburant selon la revendication 6, dans lequel les voies d'injection (11, 12) sont au nombre de deux et sont terminées chacune par un orifice d'injection (201, 202) débouchant dans le fourreau (20), le passage d'injection s'étend transversalement à l'axe longitudinal (X) et comporte une largeur (L2) suivant ledit axe (X) qui est égale à la somme de la longueur (D) suivant ledit axe (X) séparant les bords les plus proches des deux orifices d'injection (201, 202) et du diamètre des deux orifices d'injection (201, 202) suivant ledit axe (X), les deux orifices étant de même diamètre (D1, D2).

8. Dispositif d'injection (1) de carburant selon l'une des revendications 6 et 7, dans lequel les voies d'injection (11, 12) sont au nombre de deux et sont terminées chacune par un orifice d'injection (201, 202) débouchant dans le fourreau (20), dans lequel la voie d'entrée (10) est terminée par un orifice d'entrée (200) débouchant dans le fourreau à une position longitudinale qui est comprise entre les positions longitudinales respectives des orifices d'injection (201, 202), le diamètre (L2) du passage d'injection (223) suivant l'axe longitudinal (X) étant supérieur au diamètre de l'orifice d'entrée (200) suivant ledit axe (X).

9. Dispositif d'injection (1) de carburant selon l'une des revendications 6 à 8, dans lequel la voie d'entrée (10) est terminée par un orifice d'entrée (200) débouchant dans le fourreau et dans lequel la voie de purge (14) est terminée par un orifice de purge (204) débouchant également dans le fourreau (20), les bords les plus proches des orifices d'entrée (200) et de purge (204) étant séparés par une distance (D') suivant l'axe longitudinal (X) qui est supérieure à au diamètre (L2) du passage d'injection (223) suivant ledit axe (X).

10. Dispositif d'injection (1) de carburant selon l'une des revendications 6 à 9, dans lequel les voies d'injection (11, 12) sont au nombre de deux et sont terminées chacune par un orifice d'injection (201, 202) débouchant dans le fourreau (20), dans lequel le tiroir (22) comporte une portion médiane (224) séparant les passages d'injection (223) et de purge (226), la longueur de la portion médiane (224) suivant l'axe longitudinal (X) étant supérieure au diamètre (D1, D2) de chaque orifice d'injection (201, 202) suivant ledit axe (X) et inférieure à la distance (D) séparant les bords les plus proches des deux orifices d'injection (201, 202) suivant ledit axe (X).

11. Dispositif d'injection (1) de carburant selon la revendication 10, dans lequel la longueur de la portion médiane (224) suivant l'axe longitudinal (X) est en outre inférieure à la distance suivant ledit axe (X) séparant l'orifice d'entrée (200) et l'orifice d'injection (202) qui termine la deuxième voie d'injection (12).

12. Moteur (M) d'aéronef comprenant au moins un dispositif d'injection (1) de carburant multipoint selon l'une des revendications 1 à 11.

13. Moteur (M) d'aéronef selon la revendication 12, dans lequel la première voie d'injection (11) est adaptée pour délivrer un débit de carburant permanent optimisé pour des bas régimes du moteur, et la deuxième voie d'injection (12) est adaptée pour délivrer un débit de carburant intermittent optimisé pour des hauts régimes du moteur.

14. Procédé d'injection de carburant multipoint dans un moteur (M) d'aéronef au moyen d'un dispositif d'injection (1) de carburant multipoint comprenant :
- une voie d'entrée (10), au moins deux voies d'injection (11, 12), et une voie de purge (14),
- un organe distributeur (2) de carburant connecté à chaque voie et comprenant un élément mobile (22) qui comporte un passage d'injection (223),
dans lequel l'élément mobile (22) comporte en outre un passage de purge (226), et est configuré pour adopter :
- une première plage de positions dans lesquelles le passage d'injection (223) interconnecte la voie d'entrée (10) et les voies d'injection (11, 12), et
- une deuxième plage de positions dans lesquelles le passage d'injection (223) interconnecte la voie d'entrée (10) et au moins une première voie d'injection (11) tandis que le passage de purge (226) interconnecte la voie de purge (14) et au moins une deuxième voie d'injection (12),
le procédé étant **caractérisé par** des étapes de :
- détection d'une défaillance de l'organe de distribution,
- en réponse à la détection, déplacement, par un actionneur, de l'élément mobile dans une position de sécurité lors de la détection d'une défaillance de l'organe de distribution, le passage d'injection (223) interconnectant, dans cette position de sécurité de l'élément mobile (22), la voie d'entrée (10) et au moins une (11) des voies d'injection tandis que le passage de purge (226) n'interconnecte la voie de purge (14) à aucune des voies d'injection (12).

## Patentansprüche

1. Mehrpunkt-Kraftstoffeinspritzvorrichtung (1) für ein Triebwerk (M) eines Luftfahrzeugs, umfassend:
- einen Einlasskanal (10), mindestens zwei Einspritzkanäle (11, 12) und einen Ablasskanal (14),
- ein Kraftstoff-Verteilerorgan (2), der mit jedem Kanal verbunden ist und ein mobiles Element (22) umfasst, das einen Einspritzdurchgang (223) aufweist,
wobei das mobile Element (22) weiter einen Ablassdurchgang (226) aufweist und konfiguriert ist, um Folgendes einzunehmen:
- einen ersten Bereich von Positionen, in denen der Einspritzdurchgang (223) den Einlasskanal (10) und die Einspritzkanäle (11, 12) miteinander verbindet, und
- einen zweiten Bereich von Positionen, in denen der Einspritzdurchgang (223) den Einlasskanal (10) und mindestens einen ersten Einspritzkanal (11) miteinander verbindet, während der Ablassdurchgang (226) den Ablasskanal (14) und mindestens einen zweiten Einspritzkanal (12) miteinander verbindet,
wobei die Vorrichtung **dadurch gekennzeichnet ist, dass** sie weiter umfasst
- ein Stellglied (16), das angepasst ist, um das mobile Element (22) zu verschieben,
- einen Positionssensor (18), der konfiguriert ist, um eine Position des mobilen Elements zu messen,
- eine Steuerungseinheit (5), die angepasst ist, um die durch den Sensor (18) gemessene Position zu empfangen, um die Verschiebung des mobilen Elements (22) durch das Stellglied in Abhängigkeit von einer Verteilungsvorgabe und einer Ablassvorgabe anzusteuern, um das mobile Element bei Erfassung einem Ausfall des Verteilerorgans in eine Sicherheitsposition zu verschieben, wobei der Einspritzdurchgang (223) in dieser Sicherheitsposition des mobilen Elements (22) den Einlasskanal (10) und mindestens einen (11) der Einspritzkanäle miteinander verbindet, während der Ablassdurchgang (226) den Ablasskanal (14) mit keinem der Einspritzkanäle (12) verbindet.

2. Kraftstoffeinspritzvorrichtung (1) nach Anspruch 1, wobei der Einspritzdurchgang (223) den Einlasskanal (10) und nur den ersten Einspritzkanal (11) miteinander verbindet, wenn das mobile Element (22) die Sicherheitsposition einnimmt.

3. Kraftstoffeinspritzvorrichtung (1) nach einem der Ansprüche 1 und 2, wobei der Einlasskanal durch eine Einlassöffnung (200) abgeschlossen wird, die vollkommen in den Einspritzdurchgang (223) mündet, wenn das mobile Element (22) die Sicherheitsposition einnimmt.

4. Kraftstoffeinspritzvorrichtung (1) nach einem der Ansprüche 1 bis 3, wobei der erste Einspritzkanal (11) durch eine Einspritzöffnung (201) abgeschlossen wird, die vollkommen in den Einspritzdurchgang (223) mündet, wenn das mobile Element (22) die Sicherheitsposition einnimmt.

5. Kraftstoffeinspritzvorrichtung (1) nach einem der Ansprüche 1 bis 4, wobei das mobile Element (22) konfiguriert ist, um einen dritten Bereich von Positionen einzunehmen, in der der Einspritzdurchgang (223) den Einlasskanal (10) nur mit dem ersten Einspritzkanal (11) verbindet, und in der der Ablassdurchgang (226) den Ablasskanal (14) mit keinem der Einspritzkanäle (12) verbindet.

6. Kraftstoffeinspritzvorrichtung (1) nach einem der Ansprüche 1 bis 5, wobei das mobile Element (22) ein Schieber ist, der entlang einer Längsachse (X) in einer Kanüle (20) gleitet und dadurch, dass der Schieber (22) in der Sicherheitsposition auf Anschlag gegen einen Grund (206) der Kanüle (20) geht.

7. Kraftstoffeinspritzvorrichtung (1) nach Anspruch 6, wobei die Einspritzkanäle (11, 12) zu zweit sind und jeweils durch eine Einspritzöffnung (201, 202) abgeschlossen werden, die in die Kanüle (20) mündet, wobei sich der Einspritzdurchgang quer zur Längsachse (X) erstreckt und eine Breite (L2) entlang der Achse (X) aufweist, die gleich der Summe der Länge (D) entlang der Achse (X), welche die nächstliegenden Kanten der beiden Einspritzöffnungen (201, 202) trennt, und des Durchmessers der beiden Einspritzöffnungen (201, 202) entlang der Achse (X) ist, wobei die beiden Öffnungen im selben Durchmesser (D1, D2) sind.

8. Kraftstoffeinspritzvorrichtung (1) nach einem der Ansprüche 6 und 7, wobei die Einspritzkanäle (11, 12) zu zweit sind und jeweils durch eine Einspritzöffnung (201, 202) abgeschlossen werden, die in die Kanüle (20) mündet, wobei der Einlasskanal (10) durch eine Einlassöffnung (200) abgeschlossen wird, die in einer Längsposition in die Kanüle mündet, die zwischen den jeweiligen Längspositionen der Einspritzöffnungen (201, 202) enthalten ist, wobei der Durchmesser (L2) des Einspritzdurchgangs (223) entlang der Längsachse (X) größer ist als der Durchmesser der Einlassöffnung (200) entlang der Achse (X).

9. Kraftstoffeinspritzvorrichtung (1) nach einem der Ansprüche 6 bis 8, wobei der Einlasskanal (10) durch eine Einlassöffnung (200) abgeschlossen wird, die in die Kanüle mündet, und wobei der Ablasskanal (14) durch eine Ablassöffnung (204) abgeschlossen wird, die ebenfalls in die Kanüle (20) mündet, wobei die nächstliegenden Kanten der Einlass- (200) und der Ablassöffnung (204) durch einen Abstand (D') entlang der Längsachse (X) getrennt sind, der größer ist als der Durchmesser (L2) des Einspritzdurchgangs (223) entlang der Achse (X).

10. Kraftstoffeinspritzvorrichtung (1) nach einem der Ansprüche 6 bis 9, wobei die Einspritzkanäle (11, 12) zu zweit sind und jeweils durch eine Einspritzöffnung (201, 202) abgeschlossen werden, die in die Kanüle (20) mündet, wobei der Schieber (22) einen Mittelabschnitt (224) aufweist, der die Einspritz- (223) und Ablassdurchgänge (226) trennt, wobei die Länge des Mittelabschnitts (224) entlang der Längsachse (X) größer ist als der Durchmesser (D1, D2) jeder Einspritzöffnung (201, 202) entlang der Achse (X) und kleiner als der Abstand (D), der die nächstliegenden Kanten der beiden Einspritzöffnungen (201, 202) entlang der Achse (X) trennt.

11. Kraftstoffeinspritzvorrichtung (1) nach Anspruch 10, wobei die Länge des Mittelabschnitts (224) entlang der Längsachse (X) weiter kleiner ist als der Abstand entlang der Achse (X), der die Einlassöffnung (200) und die Einspritzöffnung (202) trennt, die den zweiten Einspritzkanal (12) abschließt.

12. Triebwerk (M) eines Luftfahrzeugs, umfassend mindestens eine Mehrpunkt-KraftstoffEinspritzvorrichtung (1) nach einem der Ansprüche 1 bis 11.

13. Triebwerk (M) eines Luftfahrzeugs nach Anspruch 12, wobei der erste Einspritzkanal (11) angepasst ist, um einen optimierten permanenten Kraftstoffdurchsatz für niedrige Drehzahlen des Triebwerks zu liefern, und der zweite Einspritzkanal (12) angepasst ist, um einen optimierten unterbrochenen Kraftstoffdurchsatz für hohe Drehzahlen des Triebwerks zu liefern.

14. Verfahren zur Mehrpunkt-Kraftstoffeinspritzung in ein Triebwerk (M) eines Luftfahrzeugs mittels einer Mehrpunkt-Kraftstoffeinspritzvorrichtung (1), umfassend:
- einen Einlasskanal (10), mindestens zwei Einspritzkanäle (11, 12) und einen Ablasskanal (14),
- ein Kraftstoff-Verteilerorgan (2), der mit jedem Kanal verbunden ist und ein mobiles Element (22) umfasst, das einen Einspritzdurchgang (223) aufweist,
wobei das mobile Element (22) weiter einen Ablassdurchgang (226) aufweist und konfiguriert ist, um Folgendes einzunehmen:
- einen ersten Bereich von Positionen, in denen der Einspritzdurchgang (223) den Einlasskanal (10) und die Einspritzkanäle (11, 12) miteinander verbindet, und
- einen zweiten Bereich von Positionen, in denen der Einspritzdurchgang (223) den Einlasskanal (10) und mindestens einen ersten Einspritzkanal (11) miteinander verbindet, während der Ablassdurchgang (226) den Ablasskanal (14) und mindestens einen zweiten Einspritzkanal (12) miteinander verbindet,
wobei das Verfahren durch die folgenden Schritte gekennzeichnet ist:
- Erfassen eines Ausfalls des Verteilerorgans,
- als Reaktion auf die Erfassung das Verschieben des mobilen Elements durch ein Stellglied in eine Sicherheitsposition, bei der Erfassung eines Ausfalls des Verteilerorgans, wobei der Einspritzdurchgang (223) in dieser Sicherheitsposition des mobilen Elements (22) den Einlasskanal (10) und mindestens einen (11) der Einspritzkanäle miteinander verbindet, während der Ablassdurchgang (226) den Ablasskanal (14) mit keinem der Einspritzkanäle (12) verbindet.

## Claims

1. A multi-point fuel injection device (1) for an aircraft engine (M), comprising:
- an intake line (10), at least two injection lines (11, 12) and a purge line (14),
- a fuel distributor (2) connected to each line and comprising a movable element (22) which includes an injection passage (223),
wherein the movable element (22) further includes a purge passage (226) and is configured to assume:
- a first range of positions wherein the injection passage (223) interconnects the intake line (10) and the injection lines (11, 12), and
- a second range of positions wherein the injection passage (223) interconnects the intake line (10) and at least one first injection line (11) while the purge passage (226) interconnects the purge line (14) and at least a second injection line (12),
the device being **characterized in that** it further comprises
- an actuator (16) suitable for moving the movable element (22),
- a position sensor (18) configured to measure a position of the movable element,
- a controller (5) suitable for receiving the position measured by the sensor (18), to control the movement of the movable element (22) by the actuator based on a distribution command and a purge command in such a way as to move the movable element into a safety position upon detecting a failure of the fuel distributor, the injection passage (223) interconnecting, in said safety position of the movable element (22), the intake line (10) and at least one (11) of the injection lines while the purge passage (226) does not interconnect the purge line (14) with any of the injection lines (12).

2. The fuel injection device (1) according to claim 1, wherein the injection passage (223) interconnects the intake line (10) and only the first injection line (11) when the movable element (22) assumes the safety position.

3. The fuel injection device (1) according to one of claims 1 and 2, wherein the intake line is terminated by an intake port (200) leading entirely into the injection passage (223) when the movable element (22) assumes the safety position.

4. The fuel injection device (1) according to one of claims 1 to 3, wherein the first injection line (11) is terminated by an injection port (201) leading entirely into the injection passage (223) when the movable element (22) assumes the safety position.

5. The fuel injection device (1) according to one of claims 1 to 4, wherein the movable element (22) is configured to assume a third range of positions wherein the injection passage (223) interconnects the intake line (10) with only the first injection line (11), and wherein the purge passage (226) does not interconnect the purge line (14) with any of the injection lines (12).

6. The fuel injection device (1) according to one of claims 1 to 5, wherein the movable element (22) is a drawer sliding in a sheath (20) along a longitudinal axis (X) and wherein, in the safety position, the drawer (22) comes into abutment against a bottom (206) of the sheath (20).

7. The fuel injection device (1) according to claim 6, wherein the injection lines (11, 12) are two in number and are each terminated by an injection port (201, 202) leading into the sheath (20), the injection passage extends transversely to the longitudinal axis (X) and includes a width (L2) along said axis (X) which is equal to the sum of the length (D) along said axis (X) separating the closest edges of the two injection ports (201, 202) and the diameter of the two injection ports (201, 202) along said axis (X), the two ports having the same diameter (D1, D2).

8. The fuel injection device (1) according to one of claims 6 and 7, wherein the injection lines (11, 12) are two in number and are each terminated by an injection port (201, 202) leading into the sheath (20), wherein the intake line (10) is terminated by an intake port (200) leading into the sheath at a longitudinal position which is comprised between the respective longitudinal positions of the injection ports (201, 202), the diameter (L2) of the injection passage (223) along the longitudinal axis (X) being greater than the diameter of the intake port (200) along said axis (X).

9. The fuel injection device (1) according to one of claims 6 to 8, wherein the intake line (10) is terminated by an intake port (200) leading into the sheath and wherein the purge line (14) is terminated by a purge port (204) also leading into the sheath (20), the closest edges of the intake (200) and purge (204) ports being separated by a distance (D') along the longitudinal axis (X) which is greater than the diameter (L2) of the injection passage (223) along said axis (X).

10. The fuel injection device (1) according to one of claims 6 to 9, wherein the injection lines (11, 12) are two in number and are each terminated by an injection port (201, 202) leading into the sheath (20), wherein the drawer (22) includes a median portion (224) separating the injection (223) and purge (226) passages, the length of the median portion (224) along the longitudinal axis (X) being greater than the diameter (D1, D2) of each injection port (201, 202) along said axis (X) and less than the distance (D) separating the closest edges of the two injection ports (201, 202) along said axis (X).

11. The fuel injection device (1) according to claim 10, wherein the length of the median portion (224) along the horizontal axis (X) is furthermore less than the distance along said axis (X) separating the intake port (200) and the injection port (202) that terminates the second injection line (12).

12. An aircraft engine (M) comprising at least one multi-point fuel injection device (1) according to one of claims 1 to 11.

13. The aircraft engine (M) according to claim 12, wherein the first injection line (11) is designed to deliver a constant fuel flow optimized for low engine power settings, and the second injection line (12) is designed to deliver an intermittent fuel flow optimized for high engine power settings.

14. Multi-point fuel injection method in an aircraft engine (M) by means of a multi-point fuel injection device (1) comprising
- an intake line (10), at least two injection lines (11, 12) and a purge line (14),
- a fuel distributor (2) connected to each line and comprising a movable element (22) which includes an injection passage (223),
wherein the movable element (22) further includes a purge passage (226) and is configured to assume:
- a first range of positions wherein the injection passage (223) interconnects the intake line (10) and the injection lines (11, 12), and
- a second range of positions wherein the injection passage (223) interconnects the intake line (10) and at least one first injection line (11) while the purge passage (226) interconnects the purge line (14) and at least a second injection line (12),
the method being **characterized by** steps of:
- detecting a failure of the fuel distributor,
- in response to the detecting, moving, via an actuator, of the movable element into a safety position upon detecting a failure of the fuel distributor, the injection passage (223) interconnecting, in this safety position of the movable element (22), the intake line (10) and at least one (11) of the injection lines while the purge passage (226) does not interconnect the purge line (14) with any of the injection lines (12).
